# EUROPÄISCHE PATENTANMELDUNG

(11) **EP 4 099 113 A1**
(43) Veröffentlichungstag der Anmeldung: **07.12.2022**
(21) Anmeldenummer: 21176892.4
(22) Anmeldetag: 31.05.2021
(51) Int. Cl.: G05B 23/02

(54) **GRAPHISCH UNTERSTÜTZTES WARNVERFAHREN FÜR EINE AUTOMATISIERTE ANLAGE**

(71) Anmelder: Siemens Aktiengesellschaft, 80333 München (DE)
(72) Erfinder: Lutz, Benjamin, 76327 Pfinztal (DE)

(57) **Zusammenfassung**

Die Erfindung betrifft ein Warnverfahren (100) für einen Benutzer einer automatisierten Anlage (10), die eine Mehrzahl an Geräten (20) umfasst. Die Geräte 830) sind über eine Steuereinheit (30) betätigbar. Das Warnverfahren (100) umfasst einen ersten Schritt (110), in dem ein Bereitstellen der automatisierten Anlage (10) in einem aktiven Betriebszustand erfolgt. Das Warnverfahren (100) umfasst auch einen zweiten Schritt (120), in dem ein Erfassen einer Messgröße (13, 23) mittels zumindest einem der Geräte (20) und Auslösen eines Alarms (25) durchgeführt wird. In einem dritten Schritt (130) erfolgt ein Ermitteln einer Zustandsvariable (36) und/oder einer Steuerungsvariable (38), die über ein Verknüpfungskriterium (34) mit dem Alarm (25) verbunden ist. Ferner umfasst das Warnverfahren (100) einen vierten Schritt (140), in dem der Alarm (25) über eine erste graphische Benutzeroberfläche (42) als Alarmbenachrichtigung (40) ausgegeben wird. Erfindungsgemäße weist die Alarmbenachrichtigung (40) für den Benutzer eine durch den Benutzer aufrufbare unmittelbare Verknüpfung (45) zu einer zweiten graphischen Benutzeroberfläche (44) auf. Auf der zweiten graphischen Benutzeroberfläche (44) wird zumindest die im Schritt c) ermittelte Zustandsvariable (36) und/oder zumindest die im Schritt c) ermittelte Steuerungsvariable (38) manipulierbar ausgegeben. Die Erfindung betrifft auch ein Computerprogrammprodukt (50) zum Durchführen des beanspruchten Warnverfahrens (100) und eine Steuereinheit (30), die zum Ausführen des Computerprogrammprodukt. (50) ausgebildet ist. Ferner betrifft die Erfindung eine automatisierte Anlage (10), die mit einer solchen Steuereinheit ausgestattet ist.

## Beschreibung

Die Erfindung betrifft ein graphisch unterstütztes Warnverfahrens für eine automatisierte Anlage und ein Computerprogrammprodukt, mit der ein solches umsetzbar ist. Die Erfindung betrifft gleichermaßen eine Steuereinheit, die zu einem Durchführen eines solchen Warnverfahrens eingerichtet ist und eine automatisierte Anlage, die mit einer derartigen Steuereinheit ausgestattet ist.

Die Patentanmeldung US 2019/0146809 A1 offenbart ein Verfahren zum Ausgeben einer Benutzerbenachrichtigung auf einem Smartphone mit Touchscreen. Darin wird bei einer laufenden Applikation ein Benachrichtigungsfenster erzeugt, das graphisch über die laufende Applikation gelegt wird. Das Benachrichtigungsfenster wird mit einer interaktiven Eingabe versehen, über die der Benutzer auf die Benachrichtigung reagieren kann. Die Reaktion auf das Benachrichtigungsfenster kann dabei als Bildschirmgeste ausgebildet sein.

In automatisierten Anlagen liegt ein zunehmender Grad an Komplexität vor, die durch eine steigende Anzahl an Geräten und Verknüpfungen dieser untereinander hervorgerufen wird. Im Falle eines nicht bestimmungsgemäßen Betriebszustands, beispielsweise bei einer Störung, kann eine Vielzahl an Benachrichtigungen an einen Benutzer entstehen, die dessen Aufnahmevermögen übersteigt. Gleichermaßen ist es für einen Benutzer aufwendig, in einem derartigen Fall, eine adäquate Steuerungseingabe, insbesondere Gegenmaßnahmen, vorzunehmen. Der Erfindung liegt die Aufgabe zugrunde, ein Warnverfahren für eine automatisierte Anlage bereitzustellen, die dem Benutzer eine schnelle, zielgerichtete und wirksame Reaktion auf vorliegende Betriebssituationen erlaubt.

Die Aufgabenstellung wird durch ein erfindungsgemäßes Warnverfahren für einen Benutzer einer automatisierten Anlage gelöst. Die automatisierte Anlage umfasst eine Mehrzahl an Geräten, durch die ein Anlagenprozess durchgeführt wird. Die automatisierte Anlage kann dabei beispielsweise eine Fertigungsanlage, eine chemische Anlage, ein Lebensmittelverarbeitungsanlage, eine Raffinerie, eine Öl- oder Gasförderanlage, eine pharmazeutische Anlage, ein Kraftwerk oder ein Leitsystem sein. Die Geräte sind über eine Steuereinheit betätigbar, also ansteuerbar. Das Warnverfahren umfasst einen ersten Schritt, in dem die automatisierte Anlage in einem aktiven Betriebszustand bereitgestellt wird. Im aktiven Betriebszustand wird der Anlagenprozess durchgeführt oder hochgefahren. Zumindest ein Teil der Geräte der Anlage ist hierbei im Betrieb. Der im ersten Schritt eingestellte aktive Betriebszustand der automatisierten Anlage stellt einen Ausgangszustand aus, von dem die weiteren Schritte ausgehen. Das Warnverfahren umfasst ferner einen zweiten Schritt, in dem ein Erfassen einer Messgröße mittels zumindest einem der Geräte erfolgt. Die erfasste Messgröße kann einen Zustand des entsprechenden Geräts charakterisieren oder es erlauben, daraus den Zustand des entsprechenden Geräts abzuleiten oder eine Messgröße eines Prozessmediums sein. Ausgehend von der zumindest einen erfassten Messgröße erfolgt ein Auslösen, also ein Veranlassen, eines Alarms, der an den Benutzer auszugeben ist.

Das Warnverfahren weist ebenso einen dritten Schritt auf, in dem zumindest eine Zustandsvariable und/oder Steuerungsvariable ermittelt wird. Die Zustandsvariable und/oder Steuerungsvariable ist über ein Verknüpfungskriterium mit dem Alarm verbunden, über das das Ermitteln erfolgt. Die Zustandsvariable kann hierbei eine Größe sein, die den Betriebszustand der automatisierten Anlage charakterisiert, beispielsweise eine Temperatur an einem Gerät, ein Massendurchfluss durch ein Rohr oder eine chemische Größe eines Prozessmediums, das durch den Anlagenprozess verarbeitet wird. Die Zustandsvariable ist in der automatisierten Anlage über einen Steuerbefehl höchstens mittelbar beeinflussbar. Die Steuerungsvariable stellt eine Größe zumindest eines der Geräte dar, die durch einen Steuerbefehl beeinflussbar ist, beispielsweise eine vorgebbare Drehzahl eines Motors, einen Betätigungszustands eines Ventils oder eine Solltemperatur eines Heizelements. Durch das Verknüpfungskriterium ist zwischen dem Alarm und der Zustandsvariable bzw. der Steuerungsvariable ein maschinell erkennbarer und erfassbarer Zusammenhang vorgegeben. Ebenso umfasst das Warnverfahren einen vierten Schritt, in dem ein Ausgeben des Alarms an den Benutzer erfolgt. Der Alarm wird mittels einer ersten graphischen Benutzeroberfläche als Alarmbenachrichtigung ausgegeben.

Erfindungsgemäß weist die Alarmbenachrichtigung für den Benutzer eine unmittelbare Verknüpfung auf, die durch den Benutzer aufrufbar ist, beispielsweise durch eine entsprechende Eingabe auf der ersten graphischen Benutzeroberfläche. Durch ein Aufrufen der Verknüpfung wird eine zweite graphische Benutzeroberfläche bereitgestellt und für den Benutzer dargestellt. Die erste und zweite graphische Benutzeroberflächen können beispielsweise unterschiedliche Fenster oder Dialog-Boxen sein, die nebeneinander oder zumindest teilweise überlappend darstellbar sind. Auf der zweiten graphischen Benutzeroberfläche wird die im dritten Schritt ermittelte Zustandsvariable ausgegeben. Durch die zweite graphische Benutzeroberfläche wird dem Benutzer folglich eine Anzeige der Zustandsvariable bereitgestellt. Alternativ oder ergänzend wird dem Benutzer auf der zweiten graphischen Benutzeroberfläche die im dritten Schritt ermittelte Steuerungsvariable in manipulierbarer Weise ausgegeben. Dabei wird ein aktueller Wert bzw. eine aktuelle Einstellung der Steuerungsvariable angezeigt und eine Eingabemöglichkeit bereitgestellt, um die Steuerungsvariable zu verändern. Dazu kann beispielsweise eine Drehzahländerung eines Motors vorgegeben werden, ein Öffnen oder Schließen eines Ventils, oder ein Vorgeben eines geänderten Sollwerts für ein Heizelement. Auf der zweiten graphischen Benutzeroberfläche wird dem Benutzer folglich eine Möglichkeit bereitgestellt, unmittelbar auf zumindest eines der Geräte einzuwirken.

Durch das Verknüpfungskriterium ist im erfindungsgemäßen Warnverfahren vorgebbar, auf welche Zustandsvariablen und/oder Steuerungsvariablen dem Benutzer bei einem bestimmten Alarm oder Typ von Alarmen ein schneller Zugriff bereitgestellt wird. Das Verknüpfungskriterium ist unter anderem bei einer Projektierung, also einer Planung und Auslegung, der automatisierten Anlage vorgebbar. Als Zustandsvariable ist eine in der automatisierten Anlage vorliegende Größe anzeigbar, die dem Benutzer über die Intensität eines nicht bestimmungsgemäßen Betriebszustands in sinnfälliger Weise Information liefert und/oder bei einer geeigneten Gegenmaßnahme der zugrundeliegenden Messgröße schnell folgt. Ein manuelles Auswählen von Zustandsvariablen oder Steuerungsvariablen durch den Benutzer ist dadurch entbehrlich. Bei Vorliegen eines Alarms wird ein Benutzer durch das erfindungsgemäße Warnverfahren dazu in die Lage versetzt, die vorliegende Betriebssituation in einfacher Weise zu erfassen und unverzüglich Gegenmaßnahmen einzuleiten. Hierdurch können Beschädigungen der automatisierten Anlage durch länger andauernde nicht bestimmungsgemäße Betriebszustände reduziert werden.

In einer Ausführungsform des beanspruchten Warnverfahrens wird auf der zweiten graphischen Benutzeroberfläche über eine einstellbare Dauer hinweg ein zeitlicher Verlauf der Zustandsvariable angezeigt. Die einstellbare Dauer beschreibt den Zeitraum, über den hinweg der zeitliche Verlauf dargestellt wird. Beispielsweise ist so ein Drehzahlverlauf eines Motors über die letzten 30 Minuten oder ein Temperaturverlauf des Prozessmedium über die letzten zwei Stunden anzeigbar. Ein zeitlicher Verlauf einer Zustandsvariable ist in einfacher Weise durch gespeicherte Messwerte ermittelbar und kann einem Benutzer zu einer Ursache des nicht bestimmungsgemäßen Betriebszustands einen Hinweis geben. Unter anderem kann eine schnelle Änderung der Zustandsvariable, beispielsweise eine stufenförmige Änderung, in Hinweis auf einen Ausfall eines Geräts in der automatisierten Anlage hindeuten. Die Dauer, über die hinweg der zeitliche Verlauf der Zustandsvariable angezeigt wird, ist durch eine Benutzereingabe vorgebbar, durch eine feste Einstellung in einem Computerprogrammprodukt, oder durch einen Algorithmus, insbesondere eine Künstliche Intelligenz, der den Verlauf der Betriebssituation überwacht.

Des Weiteren kann im beanspruchten Warnverfahren für die Steuerungsvariable, die im dritten Schritt ermittelt wird, für den Benutzer auch eine Exklusiv-Steuerberechtigung erzeugt werden. Beim manipulierbaren Ausgeben der Steuerungsvariable liegt die Exklusiv-Steuerberechtigung vor, so dass Mitbenutzer von einem manipulierenden Zugriff auf die Steuerungsvariable ausgeschlossen sind. Bei einer Mehrbenutzer-Steuerung wird so vermieden, dass konkurrierende Zugriffe auf die Steuerungsvariable erfolgen. Durch derartige konkurrierende Zugriffe kann eine Gegenmaßnahme gegen einen nicht bestimmungsgemäßen Betriebszustand geschwächt oder vereitelt werden, was zusätzlichen Koordinationsaufwand für den Benutzer und die Mitbenutzer hervorruft. Durch die Exklusiv-Steuerberechtigung wird ein zielgerichtetes Handeln des Benutzers im beanspruchten Warnverfahren weiter unterstützt. Analog kann durch die Exklusiv-Steuerberechtigung auch ein Zugriff auf das Gerät durch selbsttätig ablaufende Routinen, beispielsweise Signalflusspläne, Steuerablaufpläne oder Regelkreise, unterbunden werden. Auch hierdurch wird eine zielgerichtete Reaktion des Benutzers weiter vereinfacht.

Ebenso kann die Steuerungsvariable, die im dritten Schritt ermittelt wird, zu einem Manipulieren eines Signalflussplans und/oder eines Steuerablaufplans ausgebildet sein. Mittels des Signalflussplans ist eine im Wesentlichen selbsttätig ablaufende Teilfunktion der automatisierten Anlage verwirklichbar. Durch die Steuerungsvariable ist der Signalflussplan unterbrechbar oder auf eine veränderte Zielsetzung, beispielweise einen veränderten Sollwert, einstellbar. Dadurch ist in einfacher Weise ein existierender Signalflussplan in eine Gegenmaßnahme gegen einen nicht bestimmungsgemäßen Betriebszustand der automatisierten Anlage einbeziehbar. Alternativ kann so ein unerwünschter Ablauf des Signalflussplans verhindert werden um die Gegenmaßnahme wirksam durchzuführen. Signalflusspläne können unter anderem als sogenannte Continuous Flow Charts, kurz CFCs, in der Steuereinheit hinterlegt sein. Unter einem Steuerablaufplan ist eine Kette von einzelnen Steuerbefehlen zu verstehen, die durch Weiterschaltbedingungen miteinander verknüpft sind. In ihrem koordinierten Zusammenwirken verwirklichen sie eine zusammenhängende Funktion. Beim beanspruchten Warnverfahren sind bei der Bereitstellung der Steuerungsvariable somit bereits existierende Steuerablaufpläne in einfacher Weise einsetzbar. Steuerablaufpläne, sogenannte Sequential Flow Charts, kurz SFCs, können analog in der Steuereinheit der automatisierten Anlage hinterlegt sein.

Ferner kann das Verknüpfungskriterium als Zuordnung der Messgröße zu einem Regelkreis ausgebildet sein, der auch das im zweiten Schritt überwachte Geräte mit einbezieht. Das Gerät, an dem im zweiten Schritt die Messgröße erfasst wird, kann im Regelkreis als Stellglied dienen oder als Regler. Die Zuordnung des Geräts zum Regelkreis ist aus Projektierungsdaten der automatisierten Anlage ableitbar. Derartige Projektierungsdaten sind in einfacher Weise verfügbar und maschinell durchsuchbar. Das beanspruchte Warnverfahren ist hierdurch geeignet, zuverlässig ein Gerät in der automatisierten Anlage zu identifizieren, durch das eine ausreichend wirksame Gegenmaßnahme durchführbar ist. Beispielsweise kann die erfasste Messgröße eine Temperatur des Prozessmediums sein, die über einen Regelkreis eingestellt ist. Das Prozessmedium wird mit einer vorgegebenen Temperatur aus einem vorangegangenen Prozessschritt zugeführt und ist durch Kühlwasserzufuhr kühlbar. Der Regelkreis umfasst hierbei als Gerät ein Ventil der Kühlwasserzufuhr. Mittels des beanspruchten Warnverfahrens ist dem Benutzer somit anzeigbar, dass die Temperatur des Prozessmediums zu hoch ist und ein Zugriff auf die Kühlwasserzufuhr wird in sinnfälliger Weise zur Verfügung gestellt. Die Effektivität des beanspruchten Warnverfahrens wird so weiter gesteigert.

In einer weiteren Ausführungsform des beanspruchten Warnverfahrens kann im dritten Schritt eine Mehrzahl an Zustandsvariablen und/oder Steuerungsvariablen mittels eines Algorithmus ausgewählt, also ermittelt, werden. Das Ermitteln der Zustandsvariablen und/oder Steuerungsvariablen per Algorithmus kann während einer Laufzeit des Warnverfahrens durchgeführt werden. Dementsprechend sind bei der Projektierung vorzunehmende Zuordnungen, insbesondere manuell eingestellte Verknüpfungskriterien, entbehrlich. Der Algorithmus kann beispielsweise als selbstlernender Algorithmus ausgebildet sein, der ausgehend von einem vorgegebenen Verknüpfungskriterium die zugehörigen Geräte selbsttätig ermitteln. Dadurch ist das beanspruchte Warnverfahren zu einer automatischen Anpassung geeignet, wenn der Aufbau der automatisierten Anlage modifiziert wird. Weiter alternativ kann der Algorithmus das Verknüpfungskriterium bzw. die Verknüpfungskriterien auch selbsttätig ermitteln, beispielsweise bei einer Projektierung der automatisierten Anlage. Dadurch wird der Aufbau einer entsprechend ausgestatteten automatisierten Anlage beschleunigt. Der Algorithmus kann hierbei Teil einer Künstlichen Intelligenz sein, mit der auch der vorliegende Betriebszustand der automatisierten Anlage überwachbar ist. Insbesondere kann der Algorithmus zumindest als Modul zu einer Spiegel-Simulation der automatisierten Anlage gehören.

Darüber hinaus kann der Zustandsvariable und/oder der Steuerungsvariable in einem fünften Schritt eine Rückmeldung durch den Benutzer zugeordnet werden. Ausgehend von der Rückmeldung werden zumindest der dritte und vierte Schritt des Warnverfahrens erneut durchgeführt. Die Rückmeldung kann darin bestehen, ob der Benutzer die unmittelbare Verknüpfung in der Alarmbenachrichtigung aufruft und/oder ob der Benutzer die Steuerungsvariable in der zweiten graphischen Benutzeroberfläche manipuliert. Wenn dies nicht der Fall ist, kann daraus geschlossen werden, dass der Benutzer diese Alarmbenachrichtigung als nicht zweckdienlich ignoriert. Dementsprechend ist ein erneuter Durchgang des dritten und vierten Schritts geboten. Wenn das beanspruchte Warnverfahren mittels eines selbstlernenden Algorithmus durchgeführt wird, ist dadurch eine selbsttätige Weiterentwicklung des Warnverfahrens möglich. Falls die Rückmeldung anzeigt, dass der Benutzer die unmittelbare Verknüpfung zur zweiten graphischen Benutzeroberfläche aufruft, können der dritte und vierte Schritt wiederholt durchgeführt werden, um zumindest ein weiteres Gerät zu ermitteln. Alternativ oder ergänzend können auch eine weitere Zustandsvariable und/oder eine weitere Steuerungsvariable ermittelt werden. Der Benutzer ist dadurch bei einem zweckgerichteten Durchsuchen die automatisierte Anlage nach einer aussagekräftigen Zustandsvariable und/oder einer wirksamen Steuerungsvariable in sinnfälliger Weise unterstützt.

Ferner kann im dritten Schritt zumindest eine Gegenmaßnahme ermittelt werden, die dazu geeignet ist, der Ursache des Alarms entgegenzuwirken, der im vierten Schritt in der Alarmbenachrichtigung angezeigt wird. Die Gegenmaßnahme wird im vierten Schritt ebenfalls angezeigt. Die Gegenmaßnahme kann zumindest eine Überprüfung von zumindest einer Zustandsvariablen und/oder zumindest einen Steuerungseingriff über ein Manipulieren zumindest einer Steuerungsvariable umfassen. Die Gegenmaßnahme kann fest vorgegeben sein und beispielsweise bei der Projektierung der automatisierten Anlage vorgegeben werden. Ebenso kann die Gegenmaßnahme auch mittels einer Erfahrungsdatenbank ermittelt werden, insbesondere zu einer Laufzeit des Warnverfahrens. Des Weiteren können dem Benutzer auch mehrere Gegenmaßnahmen vorgeschlagen werden. Die vorgeschlagene Gegenmaßnahme kann dem Benutzer im vierten Schritt auch über eine unmittelbare Verknüpfung in der Alarmbenachrichtigung aufrufbar zur Verfügung gestellt werden. Hierdurch wird dem Benutzer in übersichtlicher Weise in einer nicht bestimmungsgemäßen Betriebssituation der automatisierten Anlage eine zielgerichtete Reaktion ermöglicht. Folglich sind Beschädigungen der automatisierten Anlage durch andauernde nicht bestimmungsgemäße Betriebszustände vermeidbar.

In einer weiteren Ausführungsform des beanspruchten Warnverfahrens wird im dritten Schritt eine Prognose zu zumindest einer Zustandsvariable ermittelt. Die Prognose geht vom vorliegenden Betriebszustand der automatisierten Anlage aus. So wird eine weitere Entwicklung der Zustandsvariable unter der Annahme prognostiziert, dass der vorliegende Betriebszustand andauert. Beispielsweise kann die Zustandsvariable als technisch nutzbare Lebensdauer einer Komponente, insbesondere eines Geräts, in der automatisierten Anlage ausgebildet sein. Das beanspruchte Warnverfahren erlaubt es damit, durch Manipulieren zumindest einer Steuerungsvariable die prognostizierte Zustandsvariable derart anzupassen, dass ein vorteilhafter Weiterbetrieb der automatisierten Anlage erfolgt. Beispielsweise kann die verbleibende technisch nutzbare Lebensdauer der Komponente durch Manipulieren der Steuerungsvariable verlängerbar bis zu einem ohnehin geplanten Wartungsvorgang. Das beanspruchte Warnverfahren erlaubt es dadurch, die automatisierte Anlage mit erhöhter Wirtschaftlichkeit zu betreiben.

Die zugrundeliegende Aufgabenstellung wird auch durch ein erfindungsgemäßes Computerprogrammprodukt gelöst. Das Computerprogrammprodukt ist zu einem Steuern einer automatisierten Anlage ausgebildet, die eine Mehrzahl an Geräten umfasst, die über eine Steuereinheit betätigbar sind. Mittels der Geräte wird ein Anlagenprozess in der automatisierten Anlage durchgeführt. Das Computerprogrammprodukt ist auf der Steuereinheit ausführbar gespeichert, so dass zur Laufzeit Steuerbefehle an die Geräte erzeugbar sein. Erfindungsgemäß ist Computerprogrammprodukt dazu ausgebildet, zumindest eine Ausführungsform des oben skizzierten Warnverfahrens durchzuführen. Das Computerprogrammprodukt kann dabei monolithisch oder modular aufgebaut sein. Unter einem monolithischen Computerprogrammprodukt ist zu verstehen, dass sämtliche Schritte des Warnverfahrens auf einer Hardwareplattform durchgeführt wird. Unter modular ist hingegen zu verstehen, dass das Computerprogrammprodukt eine Mehrzahl an Teilprogrammen umfasst, die in einem kommunikativen Datenaustausch zusammenwirken, um das Warnverfahren auszuführen. Die Teilprogramme sind hierbei auf unterschiedlichen Hardwareplattformen ausführbar, beispielsweise einer Steuereinheit der automatisierten Anlage und einer damit verbundenen übergeordneten Steuereinheit, beispielsweise einer Computer-Cloud. Ferner kann das Computerprogrammprodukt in Software ausgebildet sein oder festverdrahtet ausgebildet sein, also beispielsweise als Chip, Mikrocontroller oder FPGA. Das erfindungsgemäße Computerprogrammprodukt ist auch im Zuge einer Nachrüstung in einer bestehenden automatisierten Anlage einrichtbar. Die technischen Vorzüge des beanspruchten Warnverfahrens ist daher mit einer breiten Spanne an automatisierten Anlagen in kosteneffizienter Weise erzielbar.

In einer Ausführungsform des beanspruchten Computerprogrammprodukts kann dieses eine Spiegel-Simulation umfassen, durch die der Betrieb der automatisierten Anlage abgebildet ist. Die Spiegel-Simulation ist zur Laufzeit des Warnverfahrens mit Messwerten abgleichbar und beispielsweise mit einem selbstlernenden Algorithmus weiterentwickelbar. Dementsprechend kann die Spiegel-Simulation eine steigende Realitätstreue, und damit eine steigende Aussagekraft über den vorliegenden Betriebszustand oder einen prognostizierten Betriebszustand der automatisierten Anlage aufweisen. Die Spiegel-Simulation kann als Digitaler Zwilling der automatisierten Anlage ausgebildet sein. Sogenannte Digitale Zwillinge sind unter anderem in der Druckschrift US 2017/286572 A1 näher beschrieben. Der Offenbarungsgehalt von US 2017/286572 A1 wird durch Verweisung in die vorliegende Anmeldung mit einbezogen. Das beanspruchte Warnverfahren, und somit auch das beanspruchte Computerprogrammprodukt, ist dazu geeignet, Fortschritte im Bereich der Spiegel-Simulationen zu nutzen, um zielgerichtetere Alarmbenachrichtigungen zu erzeugen. Derartige Alarmbenachrichtigungen können unmittelbare aufrufbare Verknüpfungen zu aussagekräftigeren Zustandsvariablen und/oder wirksameren Steuerungsvariablen aufweisen. Die technischen Vorteile des beanspruchten Computerprogrammprodukts werden so in gesteigertem Umfang verwirklicht.

Gleichermaßen wird die zugrundliegende Aufgabe durch eine erfindungsgemäße Steuereinheit gelöst. Die Steuereinheit ist zu einem Steuern einer Mehrzahl an Geräten ausgebildet, die zu einer automatisierten Anlage gehören. Auf der Steuereinheit ist ein Computerprogrammprodukt ausführbar gespeichert. Erfindungsgemäß ist das Computerprogrammprodukt gemäß einer der oben beschriebenen Ausführungsformen ausgebildet. Die Steuereinheit ist dazu ausgebildet, zumindest eine Ausführungsform des oben dargestellten Warnverfahrens durchzuführen.

Ebenso wird die eingangs dargestellte Aufgabenstellung durch eine erfindungsgemäße automatisierte Anlage gelöst. Die automatisierte Anlage umfasst eine Mehrzahl an Geräten, die dazu geeignet sind, auf der automatisierten Anlage einen Anlagenprozess durchzuführen. Die automatisierte Anlage umfasst ebenso eine Steuereinheit, die mit den Geräten verbunden ist und dazu geeignet ist, diese zu steuern, insbesondere zu betätigen. Erfindungsgemäß ist die Steuereinheit gemäß einer der oben skizzierten Ausführungsformen ausgebildet. Eine derart ausgestattete automatisierte Anlage ist von einem Benutzer schnell und zielgerichtet aus einem nicht bestimmungsgemäßen Betriebszustand heraussteuerbar. Dies erlaubt es, Beschädigungen der automatisierten Anlage zu vermeiden und einen dauerhaft wirtschaftlichen Betrieb zu gewährleisten.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die in den Figuren gezeigten Ausführungsformen mit den oben skizzierten Merkmalen kombinierbar. Es zeigen im Einzelnen:
- FIG 1: schematisch eine erste Ausführungsform des bean-spruchten Warnverfahrens in einem ersten Stadium;

- FIG 2: schematisch die erste Ausführungsform des beanspruchten Warnverfahrens in einem zweiten Stadium;
- FIG 3: eine Detailansicht der ersten Ausführungsform des beanspruchten Warnverfahrens während des zweiten Stadiums;
- FIG 4: eine Detailansicht einer zweiten Ausführungsform des beanspruchten Warnverfahrens während des zweiten Stadiums;
- FIG 5: einen Ablauf einer dritten Ausführungsform des beanspruchten Warnverfahrens.

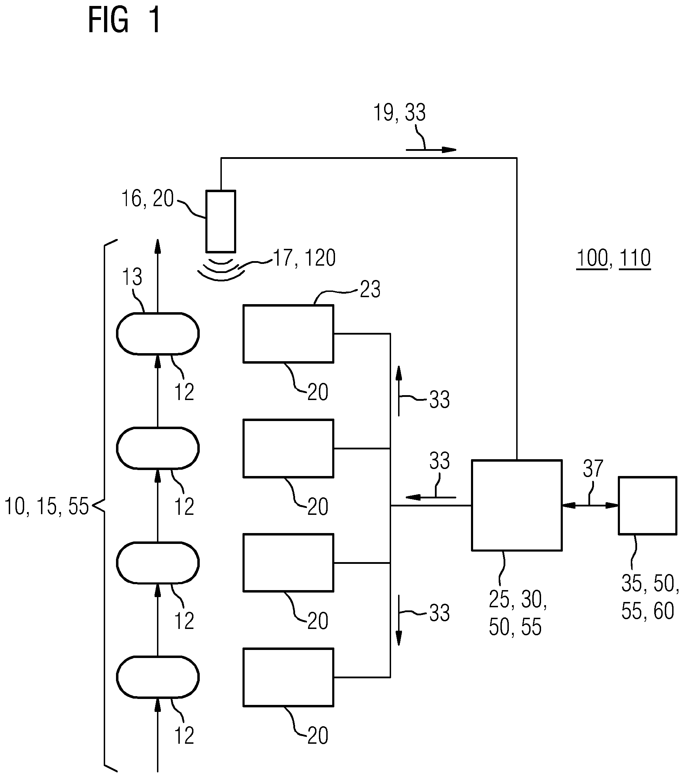

In FIG 1 ist schematisch eine erste Ausführungsform des beanspruchten Warnverfahrens 100 in einem ersten Stadium dargestellt. Dazu gehört ein erster Schritt 110 des beanspruchten Warnverfahrens 100, in dem eine automatisierte Anlage 10 in einem aktiven Betriebszustand bereitgestellt wird. Die automatisierte Anlage 10 umfasst eine Mehrzahl an Geräten 20, mit denen ein Anlagenprozess 15 ausgeführt wird. Im Anlagenprozess 15 wird ein Prozessmedium 12 verarbeitet, auf das Geräte 20 einwirken. Die Geräte 20 sind mit einer Steuereinheit 30 verbunden, die dazu ausgebildet ist, Steuerbefehle 33 an die Geräte 20 zu senden. Der Steuerbefehl 33 kann auch ein Befehl zu einem Abfragen von Messwerten 19 sein, beispielsweise bei einem als Sensor 16 ausgebildeten Gerät 20. Zum Ausgeben der Steuerbefehle 33 und Verarbeiten der Messwerte 19 ist die Steuereinheit 30 mit einem als Teilprogramm 55 ausgebildeten Computerprogrammprodukt 50 ausgestattet. Ein weiteres Teilprogramm 55 ist auf einer übergeordneten Steuereinheit 35 ausführbar gespeichert, das mit dem Teilprogramm 55 auf der Steuereinheit 30 über eine kommunikative Datenverbindung 37 zusammenwirkt. Durch das Zusammenwirken der Teilprogramme 55 wird die Funktionalität des Computerprogrammprodukts 50 verwirklicht, mit dem auch das beanspruchte Warnverfahren 100 durchführbar ist. Das Computerprogrammprodukt 50 umfasst eine Spiegel-Simulation 60, die als Digitale Zwilling der automatisierten Anlage 10 ausgebildet ist, mit dem deren Betriebsverhalten simulierbar ist. Das Warnverfahren 100 geht vom ersten Schritt 110 als Ausgangszustand aus.

FIG 1 zeigt ebenso schematisch teilweise einen zweiten Schritt 120 des beanspruchten Warnverfahrens 100, in dem mittels des Sensors 16 eine Messgröße 13 des Prozessmediums 12 und/oder eine Messgröße 23 eines Geräts 20 erfasst wird. Die Erfassung 17 durch den Sensor 16 ist dabei insbesondere als Messung ausgebildet, bei der eine physikalische Größe als Messgröße 13, 23 in Form von Messwerten 19 erfasst wird. Durch die zumindest eine erfasste Messgröße 13, 23 wird ein Betriebszustand des Anlagenprozess 15 und/oder des entsprechenden Geräts 20 charakterisiert. Die Messwerte 19 zur entsprechenden Messgröße 13, 23 werden an die Steuereinheit 30 übertragen. Es erfolgt ein Auswerten der Messwerte 19 durch die Steuereinheit 30, ob ein Alarm 25 an einen Benutzer der automatisierten Anlage 10 auszugeben ist. Während des zweiten Schritts 120 des Warnverfahrens 100 wird ein Alarm 25 veranlasst, der an den Benutzer auszugeben ist.

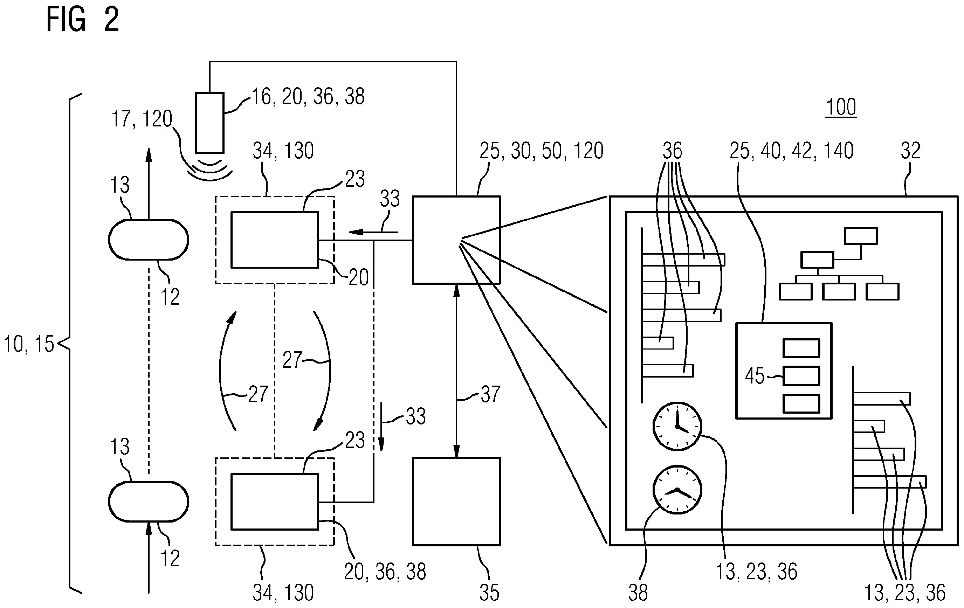

Ein zweites Stadium der ersten Ausführungsform des beanspruchten Warnverfahrens 100 ist in FIG 2 schematisch dargestellt. Das in FIG 2 gezeigte Stadium geht davon aus, dass der zweite Schritt 120 abgeschlossen ist und durch die Steuereinheit 30 ein auszugebender Alarm 25 ermittelt ist und dessen Ausgabe veranlasst wird. Basierend hierauf erfolgt in einem dritten Schritt 130 ein Ermitteln eines Verknüpfungskriteriums 34, durch das mehrere Geräte 20 mit dem Alarm 25 verknüpft sind. Die Geräte 20, die mit dem Alarm 25 über das Verknüpfungskriterium 34 verbunden sind, sind dazu geeignet, die Messgröße 13, 23, die dem Alarm 25 zugrunde liegt, zu beeinflussen und/oder weitere für den Alarm 25 relevante Informationen, insbesondere Zustandsvariablen 36 zu liefern. Das Verknüpfungskriterium 34 ist in FIG 2 die Zugehörigkeit der Geräte 20 zu einem Regelkreis 27, wobei der Alarm 25 eine Unstimmigkeit in diesem Regelkreis 27 anzeigt. Die Zustandsvariablen 36 können aus zumindest einer Messgröße 13, 23 abgeleitete Werte oder auch Messgrößen 13, 23 selbst sein. Weiter kann über das Verknüpfungskriterium 34 auch eine Steuerungsvariable 38 ermittelt werden, die so mit dem Alarm 25 verbunden ist. Die Steuerungsvariable 38 stellt eine Größe dar, mit der der Betrieb eines der Geräte 20 beeinflussbar ist. Der dritte Schritt 130 wird ebenfalls mittels des Computerprogrammprodukts 50 durchgeführt.

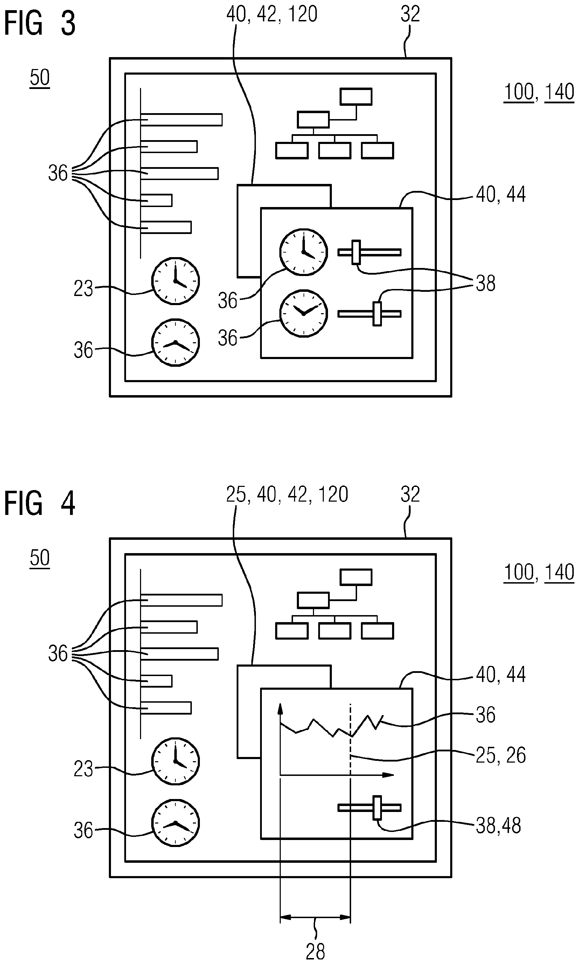

Darüber hinaus ist in FIG 2 ein vierter Schritt 140 des Warnverfahrens 100 dargestellt. Im vierten Schritt 140 wird der Alarm 25 in einer ersten graphischen Benutzeroberfläche 42 in Form einer Alarmbenachrichtigung 40 ausgegeben. Die Alarmbenachrichtigung 40 wird auf einer Anzeigevorrichtung 32 dargestellt, die zumindest funktional mit der Steuereinheit 40 verbunden ist. Die erste graphische Benutzeroberfläche 42 ist als Fenster ausgebildet, das innerhalb einer Mehrzahl an Anzeigen von Zustandsvariablen 36, Messgrößen 13, 23 und Steuerungsvariablen 38 eingeblendet ist. Die Alarmbenachrichtigung 40 umfasst eine unmittelbare Verknüpfung 45, die durch den Benutzer aufrufbar ist. Die unmittelbare Verknüpfung 45 ist nach Art eines Hyperlinks ausgebildet und führt den Benutzer zu einer zweiten graphischen Benutzeroberfläche 44, die beispielsweise in FIG 3 näher gezeigt ist.

In FIG 3 ist in einer Detailansicht der Anzeigevorrichtung 32 gezeigt, bei der im zweiten Schritt 130 ermittelte Alarm 25 in einem vierten Schritt 140 in einer ersten graphischen Benutzeroberfläche 42 angezeigt wird. Eine nicht näher gezeigte Verknüpfung 45 ist in FIG 3 vom Benutzer aufgerufen und eine zweite graphische Benutzeroberfläche 44 wird angezeigt. Die zweite graphische Benutzeroberfläche 44 ist als Fenster ausgebildet, das eingeblendet wird. In der zweiten graphischen Benutzeroberfläche 44 werden die Zustandsvariablen 36 angezeigt, die im dritten Schritt 130 ermittelt werden. Dabei handelt es sich im Zustandsvariablen 36, die in besonders aussagekräftiger Weise die dem Alarm 25 zugrundeliegende Betriebssituation charakterisieren. Ebenso werden Steuerungsvariablen 38 in manipulierbarer Form dargestellt. Die Steuerungsvariablen 38 sind als Schieberegler dargestellt, die der Benutzer auf der zweiten graphischen Benutzeroberfläche 44 bewegen kann um steuernd auf zumindest eines der Geräte 20 der automatisierten Anlage 10, wie in FIG 1 oder FIG 2 gezeigt, einzuwirken. Die in der zweiten graphischen Benutzeroberfläche 44 dargestellten Steuerungsvariablen 38 sind über das Verknüpfungskriterium 34 im dritten Schritt 130 derart ausgewählt, dass diese in besonders wirksamer Form einer Ursache des Alarms 25 entgegenwirken können. Insgesamt wird dem Benutzer über die zweite graphische Benutzeroberfläche 44 beim Auswählen geeigneter Steuerungsvariablen 38 der automatisierten Anlage 10 unterstützt, mit denen einer Ursache eines Alarms 25 zu begegnen ist. Die Steuerungsvariablen 38 stehen in Wechselwirkung mit den ebenfalls im dritten Schritt 130 ausgewählten Zustandsvariablen 36, die ebenfalls in der zweiten graphischen Benutzeroberfläche 44 angezeigt sind. Im Verlauf der weiteren Bedienung hat der Benutzer so eine schnelle Rückmeldung über die Wirksamkeit der mit den Steuerungsvariablen 38 hervorgerufenen Wirkung auf die Ursache des Alarms 25. Hierdurch werden Zustände der automatisierten Anlage 10, in denen Alarme 25 ausgegeben werden, minimiert. Hierdurch sind Beschädigungen der automatisierten Anlage 10 zuverlässig vermeidbar.

Eine zweite Ausführungsform des beanspruchten Warnverfahrens 100 ist in FIG 4 in einer Detailansicht gezeigt. Die zweite Ausführungsform des Warnverfahrens 100 umfasst einen ersten, zweiten und dritten Schritt 110, 120, 130 wird die erste Ausführungsform laut FIG 1 bis FIG 3. Bei der zweiten Ausführungsform wird im vierten Schritt 140 zur Zustandsgröße 36, die im dritten Schritt 130 ermittelt wird, deren zeitlicher Verlauf in der zweiten graphischen Benutzeroberfläche 44 angezeigt. Ein Wert der Zustandsvariable 36 wird über eine einstellbare Dauer 28 in der Vergangenheit angezeigt, also vor einem Zeitpunkt 36, in dem der Alarm 25 ausgelöst wird. Derartige zeitliche Verläufe sind in einfacher Weise bereitstellbar und vermitteln dem Benutzer ein eindeutiges Bild von der vorliegenden Betriebssituation. Ferner wird eine im dritten Schritt 130 ermittelte Steuerungsvariable 38 in manipulierbarer Weise angezeigt, durch die eine Einwirkung auf die Zustandsvariable 36 möglich ist. In der Ausführungsform nach FIG 4 wird für die Steuerungsvariable 38 eine Exklusiv-Steuerberechtigung 48 erzeugt, durch die Mitbenutzer an einem manipulierenden Zugriff auf die Steuerungsvariable 38 gehindert werden. Die Zustandsvariable 36 und die Steuerungsvariable 38 können im Computerprogrammprodukt 50 fest vorgegeben sein oder durch einen Algorithmus ausgewählt werden, insbesondere eine Künstliche Intelligenz. Hierdurch ist eine selbsttätige Weiterentwicklung des beanspruchten Warnverfahrens 100 möglich und die technischen Vorzüge des Warnverfahrens 100 in erhöhtem Umfang erzielbar.

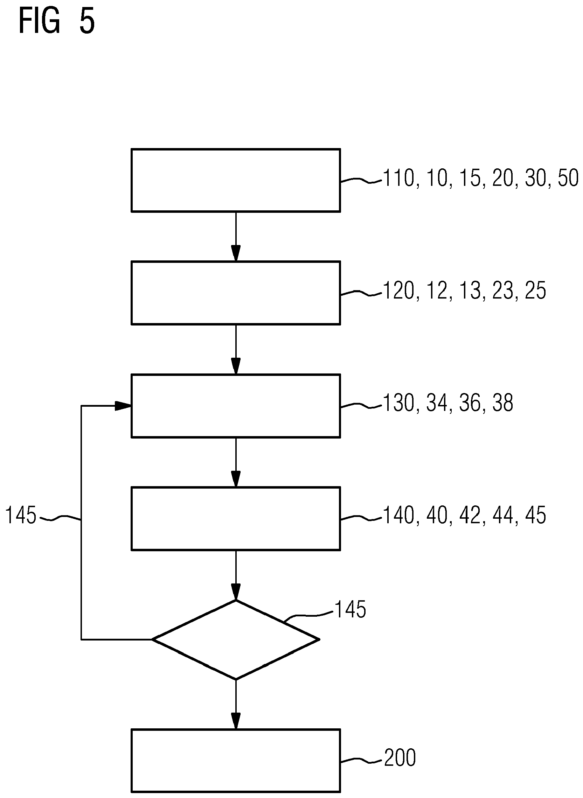

Eine weitere Ausführungsform des beanspruchten Warnverfahrens 100 ist in FIG 5 dargestellt. Das Warnverfahren 100 geht von einem ersten Schritt 110 auf, in dem eine automatisierte Anlage 10 mit einer Mehrzahl an Geräten 20 in einem aktiven Betriebszustand, also bei einem Durchführen oder Hochfahren eines Anlagenprozesses 15, bereitgestellt wird. Die automatisierte Anlage 10 umfasst eine Steuereinheit 30, auf der zumindest ein Teilprogramm 55 eines Computerprogrammprodukts 50 ausführbar gespeichert ist, mit dem das Warnverfahren 100 durchführbar ist. Auf den ersten Schritt 110 folgt ein zweiter Schritt 120, in dem eine Messgröße 13 an einem Prozessmedium 12 und/oder eine Messgröße 23 an einem der Geräte 23 erfasst wird. Basierend auf der erfassten Messgröße 13, 23 wird ein Alarm 25 ausgelöst, also veranlasst. Es schließt sich ein dritter Schritt 130 an, in dem zum Alarm 25 ein Verknüpfungskriterium 34 ermittelt wird und daraus eine Zustandsvariable 36 und/oder eine Steuerungsvariable 38. Mittels des Verknüpfungskriterium 34 sind unter anderem zumindest ein Gerät 20 ermittelbar, mit dem einer Ursache des Alarms 25 entgegengewirkt werden kann. Auf den dritten Schritt 130 folgt ein vierter Schritt 140 in dem der Alarm 25 in Form einer Alarmbenachrichtigung 40 auf einer ersten graphischen Benutzeroberfläche 42 ausgegeben wird. Die Alarmbenachrichtigung 40 umfasst eine durch den Benutzer aufrufbare Verknüpfung 45 zu einer zweiten graphischen Benutzeroberfläche 44. Die im dritten Schritt 130 ermittelte Zustandsvariable 36 und/oder Steuerungsvariable 38 wird bei einem Aufrufen durch den Benutzer in der zweiten graphischen Benutzeroberfläche 44 angezeigt. Darauf folgt eine Verzweigung 145 des Warnverfahrens 100, in der geprüft wird, ob der Benutzer die Verknüpfung 45 in einem einstellbaren Zeitraum aufruft und/oder manipulierend auf die Steuerungsvariable 38 einwirkt, diese also verstellt. Ist dies der Fall, erreicht das Warnverfahren 100 einen Endzustand 200. Ist dies hingegen nicht der Fall, erfolgt eine Rückführung 150 in den dritten Schritt 130. Die Reaktion des Benutzers in der Verzweigung 150 des Warnverfahrens 100 stellt eine Rückmeldung 46 dar. Hierdurch ist durch das Computerprogrammprodukt 50 identifizierbar, dass der Benutzer die angezeigte Zustandsvariable 36 und/oder Steuerungsvariable 38 nicht für zielführend hält. Dementsprechend ist durch ein wiederholtes Durchführen des dritten Schritts 130, insbesondere durch einen als Künstliche Intelligenz ausgebildeten Algorithmus, eine andere Zustandsvariable 36 und/oder Steuerungsvariable 38 ermittelbar. Das beanspruchte Warnverfahren 100 ist somit selbsttätig an eine dynamische Betriebssituation der automatisierten Anlage 10 anpassbar.

## Patentansprüche

1. Warnverfahren (100) für einen Benutzer einer automatisierten Anlage (10), die eine Mehrzahl an Geräten (20) umfasst, die über eine Steuereinheit (30) betätigbar sind, umfassend die Schritte:
a) Bereitstellen der automatisierten Anlage (10) in einem aktiven Betriebszustand;
b) Erfassen einer Messgröße (13, 23) mittels zumindest einem der Geräte (20) und Auslösen eines Alarms (25);
c) Ermitteln einer Zustandsvariable (36) und/oder einer Steuerungsvariable (38), die über ein Verknüpfungskriterium (34) mit dem Alarm (25) verbunden ist;
d) Ausgeben des Alarms (25) über eine erste graphische Benutzeroberfläche (42) als Alarmbenachrichtigung (40);
wobei die Alarmbenachrichtigung (40) für den Benutzer eine durch den Benutzer aufrufbare unmittelbare Verknüpfung (45) zu einer zweiten graphischen Benutzeroberfläche (44) aufweist, auf der zumindest die im Schritt c) ermittelte Zustandsvariable (36) ausgegeben wird und/oder zumindest die im Schritt c) ermittelte Steuerungsvariable (38) manipulierbar ausgegeben wird.

2. Warnverfahren (100) nach Anspruch 1, **dadurch gekennzeichnet, dass** auf der zweiten graphischen Benutzeroberfläche (44) über eine einstellbare Dauer (28) hinweg ein zeitlicher Verlauf der Zustandsvariable (36) angezeigt wird.

3. Warnverfahren (100) nach Anspruch 1 oder 2, **dadurch gekennzeichnet, dass** bezogen auf die Steuerungsvariable (38) für den Benutzer eine Exklusiv-Steuerberechtigung (48) erzeugt wird.

4. Warnverfahren (100) nach einem der Ansprüche 1 bis 3, **dadurch gekennzeichnet, dass** die Steuerungsvariable (38) zum Manipulieren eines Signalflussplans und/oder eines Steuerablaufplans ausgebildet ist.

5. Warnverfahren (100) nach einem der Ansprüche 1 bis 4, **dadurch gekennzeichnet, dass** das Verknüpfungskriterium (34) als Zuordnung der Messgröße (13, 23) zu einem Regelkreis (27) ausgebildet ist, der auch das im Schritt b) überwachte Gerät (20) umfasst.

6. Warnverfahren (100) nach einem der Ansprüche 1 bis 5, **dadurch gekennzeichnet, dass** im Schritt c) eine Mehrzahl Zustandsvariablen (36) und/oder Steuerungsvariablen (38) mittels eines Algorithmus ausgewählt wird.

7. Warnverfahren (100) nach einem der Ansprüche 1 bis 6, **dadurch gekennzeichnet, dass** der Zustandsvariable (36) und/oder der Steuerungsvariable (38) in einem weiteren Schritt e) durch den Benutzer eine Rückmeldung (46) zugeordnet wird und ausgehend von der Rückmeldung (46) zumindest die Schritte c) und d) erneut durchgeführt werden.

8. Warnverfahren (100) nach einem der Ansprüche 1 bis 7, **dadurch gekennzeichnet, dass** im Schritt c) zumindest eine Gegenmaßnahme gegen den Alarm (25) ermittelt wird, die im Schritt d) in der Alarmbenachrichtigung (40) angezeigt wird.

9. Warnverfahren (100) nach einem der Ansprüche 1 bis 8, **dadurch gekennzeichnet, dass** im Schritt c) eine Prognose zu zumindest einer Zustandsvariable (36) ausgehend vom vorliegenden Betriebszustand der automatisierten Anlage (10) ermittelt wird.

10. Computerprogrammprodukt (50) zum Steuern einer automatisierten Anlage (10), die eine Mehrzahl an Geräten (20) umfasst, die über eine Steuereinheit (30) betätigbar sind, und das Computerprogrammprodukt (50) auf der Steuereinheit (30) ausführbar gespeichert ist, **dadurch gekennzeichnet, dass** das Computerprogrammprodukt (50) zu einem Ausführen eines Warnverfahrens (100) nach zumindest einem der Ansprüche 1 bis 9 ausgebildet ist.

11. Computerprogrammprodukt (50) nach Anspruch 10, **dadurch gekennzeichnet, dass** das Computerprogrammprodukt (50) eine Spiegel-Simulation (60) umfasst, durch die der Betrieb der automatisierten Anlage (10) abgebildet ist.

12. Steuereinheit (30) zum Steuern einer Mehrzahl an Geräten (20), die zu einer automatisierten Anlage (10) und auf der ein Computerprogrammprodukt (30) ausführbar gespeichert ist, **dadurch gekennzeichnet, dass** das Computerprogrammprodukt (50) nach Anspruch 10 oder 11 ausgebildet ist.

13. Automatisierte Anlage (10), umfassend eine Mehrzahl an Geräten (20) und eine Steuereinheit (30), die mit den Geräten (20) verbunden ist, **dadurch gekennzeichnet, dass** die Steuereinheit (30) nach Anspruch 12 ausgebildet ist.
